# FASCICULE DE BREVET EUROPEEN

(11) **EP 1 975 840 B1**
(45) Date de publication et mention de la délivrance du brevet: **05.09.2018**
(21) Numéro de dépôt: 08103155.1
(22) Date de dépôt: 28.03.2008
(51) Int. Cl.: G06F 21/84

(54) **Procédé et dispositif de visualisation sécuritaire**
Verfahren und Vorrichtung zur sicheren Anzeige
Security viewing method and device

(30) Priorité: 30.03.2007 FR 0702333
(43) Date de publication de la demande: 01.10.2008
(73) Titulaire: Ingenico Group, 75015 Paris (FR)
(72) Inventeur: Achari, Karim, 91230 Montgeron (FR); Loheac, Ronan, 95350 Piscop (FR)
(74) Mandataire: Vidon Brevets & Stratégie

(56) Documents cités:
- EP-A- 1 526 424
- EP-A2- 1 677 190
- US-A- 4 899 136
- US-A- 5 075 884
- US-A1- 2004 226 041

## Description

La présente invention concerne les équipements utilisés pour effectuer des actions qui font intervenir ou portent sur des objets de nature confidentielle. A titre illustratif, on peut citer les actions de paiement qui font intervenir un numéro de compte bancaire ou qui portent sur une saisie de code confidentiel ou sur un montant à débiter ou à créditer. On pourrait encore citer d'autres actions telles que par exemple les actions, d'ordre médical ou civil, qui portent sur des données biologiques ou patrimoniales propres à un individu.

La tendance naturelle est d'accorder sa confiance de préférence à des équipements particulièrement blindés contre les intrusions ou attaques diverses. Ceci peut être réalisé à divers niveaux. Au niveau de la constitution physique de l'équipement, celui-ci peut être dans un boîtier inviolable, résistant à l'intrusion (tamper resistant en anglais), ou laissant trace visible de toute tentative de sabotage (tamper evident en anglais), ou encore apportant une réponse adaptée à une détection d'intrusion (tamper responsive en anglais). Au niveau de la constitution fonctionnelle, les données sensibles sont généralement chiffrées et leur traitement est soumis à des protocoles cryptographiques. Un degré de sécurité correct est obtenu en utilisant exclusivement des circuits électroniques gravés dans la masse. Un minimum de précautions est à prendre si on désire améliorer la souplesse d'utilisation de l'équipement. On préfère habituellement utiliser des composantes logicielles aptes à être mises en oeuvre au moyen de systèmes d'exploitation sécurisés inaccessibles à des tiers.

La souplesse d'utilisation offerte par les équipements précédemment exposés, reste limitée. Dans un monde riche en équipements électroniques divers tels que téléphones mobiles, assistants personnels ou micro-ordinateurs, un besoin de souplesse comparable se fait sentir pour les équipements destinés à être utilisés pour effectuer des actions qui font intervenir ou portent sur des objets de nature confidentielle. On sait que les systèmes d'exploitation communément dits ouverts en raison de leur large diffusion, offrent une abondance appréciable d'applications utiles et conviviales qu'il serait intéressant de pouvoir mettre en oeuvre pour satisfaire ce besoin. Cette ouverture à d'autres applications logicielles que celles rigoureusement sécuritaires, a pour inconvénient de mettre en péril la sécurité. Ainsi une application malveillante ou polluée par des séquences d'exécution malveillantes, pourrait espionner et trahir des processus sécuritaires de l'équipement.

Il existe des solutions qui consistent à systématiquement n'autoriser que des applications dûment signées, à s'exécuter dans l'équipement. Le mécanisme bien connu des signatures fait généralement intervenir des certificats contrôlés par des organismes de confiance pour garantir l'intégrité de l'application signée. Ce type de solutions restreint de fait la qualité d'ouverture du système d'exploitation en empêchant aussi une exécution d'application non nécessairement malveillante et dont il aurait été agréable de ne pas se priver.

Il existe aussi des solutions qui consistent à faire fonctionner l'équipement en deux modes différents, un mode totalement ouvert et un mode sécurisé que l'on réserve à des applications sécuritaires telles que celles pour effectuer des actions qui font intervenir ou portent sur des objets de nature confidentielle.

La mise en oeuvre d'un système d'exploitation ouvert est généralement accompagnée de celle d'un écran graphique pour afficher diverses informations. Un tel écran offre une possibilité de visualisation particulièrement expressive du mode sécurisé ou non dans lequel est l'équipement. Pour informer un utilisateur de l'équipement du mode actif, un voyant lumineux aurait pour inconvénient de devoir éduquer l'utilisateur sur l'attention à porter sur ce voyant lumineux et sur l'interprétation à lui donner pour distinguer le mode ouvert du mode sécurisé. On peut également penser à afficher un pictogramme associé ou non à un texte dans la langue de l'utilisateur. Cependant un tel type d'affichage pose un problème de compatibilité, en termes de sécurité, avec une ouverture offerte à toute application. En mode de fonctionnement ouvert du terminal, une application malveillante pourrait corrompre l'affichage de façon à tromper l'utilisateur en visualisant un mode sécurisé dans lequel le terminal ne serait pas. Une absence de certitude du mode dans lequel se trouve le terminal, présente un inconvénient considérable.

On pourrait penser utiliser deux écrans, un pour le mode ouvert et un pour le mode sécurisé. Outre les inconvénients générés en termes de coûts et d'encombrement, cette solution imposerait à l'utilisateur de surveiller deux écrans différents. Cette solution serait aussi vulnérable à certaines attaques consistant à mettre un cache sur l'écran attribué au mode sécurisé de façon à tromper un utilisateur non averti en affichant un faux mode sécurisé sur l'écran attribué au mode ouvert. Les documents US 2004/226041 et EP 1 677 190 A2 divulguent des architectures permettant d'afficher, dans des zones différentes de l'écran, des données provenant de plusieurs systèmes, dont au moins un est considéré comme étant «sécurisé». Le but de la présente invention est de fournir un procédé et un dispositif d'affichage remédiant aux inconvénients précités.

Plus particulièrement, l'invention vise à fournir un procédé de visualisation qui allie ergonomie et sécurité de la présentation d'informations.

A cette fin, la présente invention propose un procédé de visualisation sécuritaire sur un écran prévu pour afficher un premier ensemble d'informations éditées par un premier système d'exploitation. Ce procédé comprend une étape de filtrage dans laquelle un élément alloue indépendamment du premier système d'exploitation, une première zone de l'écran au premier ensemble d'informations et une deuxième zone de l'écran à un deuxième ensemble d'informations éditées par un deuxième système d'exploitation. L'étape de filtrage est combinée à une étape d'affichage réel dans laquelle les deux ensembles d'informations sont transférés à l'écran sous contrôle exclusif du deuxième système d'exploitation de façon à produire une visualisation sécuritaire du deuxième ensemble d'informations.

Suivant des modes de réalisation préférés, l'invention comprend une ou plusieurs des caractéristiques suivantes :
Le premier système d'exploitation est un système d'exploitation ouvert et le deuxième système d'exploitation est un système d'exploitation sécurisé.

Dans une étape d'affichage virtuel, le premier ensemble d'informations est écrit dans une mémoire vidéo virtuelle sous contrôle du premier système d'exploitation et dont le contenu est accessible au deuxième système d'exploitation.

Selon une alternative, dans une étape d'affichage virtuel, le premier ensemble d'informations est écrit dans une mémoire vidéo réelle sous contrôle du premier système d'exploitation de façon à pouvoir combiner des premiers signaux vidéo qui en résultent avec des deuxièmes signaux vidéo qui résultent du deuxième ensemble d'informations sous contrôle du deuxième système d'exploitation.

Le système d'exploitation sécurisé est hébergé dans un composant matériel qui isole le système d'exploitation ouvert en termes d'accès direct à l'écran.

La deuxième zone est située sur l'écran en une première position aisément identifiable par un utilisateur.

La première position est alternativement permutée avec une deuxième position précédemment couverte par la première zone.

La deuxième zone est superposée avec ou sans transparence sur la première zone en une ou plusieurs positions sur l'écran.

L'une au moins des dites positions est mouvante sur l'écran.

Un dispositif de visualisation sécuritaire sur un écran prévu pour afficher un premier ensemble d'informations éditées par un premier système d'exploitation, comprend un filtre agencé pour allouer indépendamment du premier système d'exploitation, une première zone de l'écran au premier ensemble d'informations et une deuxième zone de l'écran à un deuxième ensemble d'informations éditées par un deuxième système d'exploitation et pour transférer les deux ensembles d'informations à l'écran sous contrôle exclusif du deuxième système d'exploitation de façon à produire une visualisation sécuritaire du deuxième ensemble d'informations.

Particulièrement le premier système d'exploitation du dispositif est ouvert et le deuxième système d'exploitation du dispositif est sécurisé.

Le filtre comprend en entrée une mémoire vidéo virtuelle agencée pour recevoir le premier ensemble d'informations sous contrôle du premier système d'exploitation ouvert et en sortie une mémoire vidéo réelle pour combiner les deux ensembles d'informations.

Le filtre est agencé pour recevoir des premières données vidéo générées par un processeur standard et des deuxièmes données vidéo générées par un processeur sécurisé, et pour transférer dans une mémoire vidéo une combinaison des premières et des deuxièmes données vidéo.

Le filtre est agencé pour recevoir des premiers signaux vidéo en provenance d'un premier contrôleur vidéo et des deuxièmes signaux vidéo en provenance d'un deuxième contrôleur vidéo, et pour transférer sur l'écran une combinaison des premiers et des deuxièmes signaux vidéo.

Le filtre est agencé pour placer la deuxième zone sur l'écran en une première position aisément identifiable par un utilisateur.

Le filtre est agencé pour permuter ladite première position alternativement avec une deuxième position précédemment couverte par la première zone.

Le filtre est agencé pour superposer avec ou sans transparence la deuxième zone sur la première zone en une ou plusieurs positions sur l'écran.

Le filtre est agencé pour faire se mouvoir l'une au moins des dites positions sur l'écran.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente schématiquement un exemple de terminal dans lequel il est utile de mettre en oeuvre l'invention ;
La figure 2 représente des étapes de procédé conforme à l'invention ;
La figure 3 représente un premier schéma de dispositif conforme à l'invention.
La figure 4 représente un deuxième schéma de dispositif conforme à l'invention.
La figure 5 représente un troisième schéma de dispositif conforme à l'invention.

Nous allons décrire à présent un exemple de mise en oeuvre de dispositif de visualisation sécuritaire sur un écran prévu pour afficher un premier ensemble d'informations éditées par un premier système d'exploitation. On notera dans le dispositif, un filtre agencé pour allouer indépendamment du premier système d'exploitation, une première zone de l'écran au premier ensemble d'informations et une deuxième zone de l'écran à un deuxième ensemble d'informations éditées par un deuxième système d'exploitation et pour transférer les deux ensembles d'informations à l'écran sous contrôle exclusif du deuxième système d'exploitation de façon à produire une visualisation sécuritaire du deuxième ensemble d'informations.

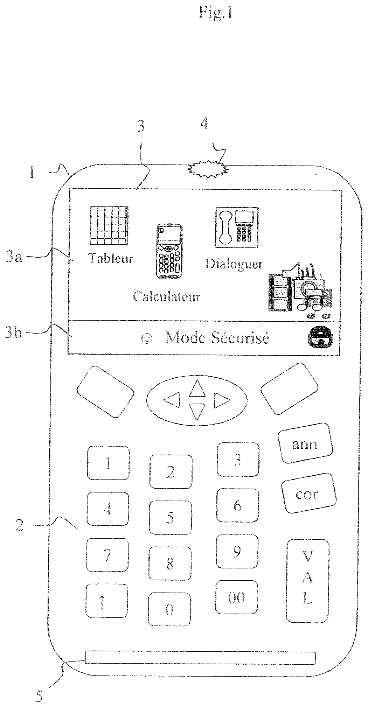

En référence à la figure 1, un terminal 1 de paiement comprend un clavier 2, un écran 3, un coupleur de communication 4 et un lecteur 5 de carte à puce, de carte magnétique ou de carte sans contact. Un terminal de paiement comprend aussi d'autres éléments non représentés ici tels que par exemple une imprimante. L'écran 3 est avantageusement équipé d'une dalle tactile qui permet de réaliser des fonctions de touches numériques semblables à celles d'un clavier par pression sur un endroit de l'écran repéré par une image particulière.

Par exemple, un utilisateur introduit sa carte à puce dans le lecteur 5 à travers une fente, regarde un montant de transaction affiché sur l'écran 3 et s'il est d'accord pour payer ce montant, entre son code PIN en en tapant les chiffres sur les touches du clavier et en validant ce code au moyen d'une touche prévue à cet effet. Le terminal vérifie alors la validité du code en dialoguant avec la puce et débite le compte de l'utilisateur en dialoguant de plus avec un serveur distant, non représenté, au moyen du coupleur de communication 4. Le coupleur de communication 4 est de nature filaire tel qu'on en rencontre parfois aux caisses de grands magasin ou de nature sans fil au moyen par exemple d'ondes électromagnétiques.

Dans le cas d'un téléphone mobile, avec une puce résidente dans le téléphone et un coupleur de communication 4 constitué par son antenne habituelle, l'invention est intéressante pour se prémunir par exemple contre des applications malveillantes qui enverrait un code confidentiel de l'utilisateur par exemple par message texto (SMS).

Il est intéressant d'équiper le terminal 1 avec un système d'exploitation ouvert. Le qualificatif « ouvert » est à prendre dans son sens le plus large communément adopté dans le monde utilisateur. En d'autres termes, le qualificatif désigne bien entendu les systèmes d'exploitation réellement ouverts tels que le sont les systèmes UNIX et LINUX d'origine. Ici le qualificatif « ouvert » désigne aussi les systèmes à large diffusion commerciale tels que le sont par exemple différentes versions de Microsoft Windows™. Bien que les programmes source du noyau et de nombreuses primitives de tels systèmes d'exploitation restent sous le contrôle de leur propriétaire, le sens commun leur attribue le qualificatif « ouvert » parce que suffisamment d'accès au système d'exploitation sont largement diffusés. Cette large diffusion permet de développer de nombreuses applications et de nombreuses plateformes matérielles qui enrichissent de façon appréciable l'offre en matières de produits et qui établissent en quelque sorte une collectivité large d'utilisateurs et de développeurs qui partagent des environnements communs. Aujourd'hui de tels systèmes d'exploitation ont pris l'habitude de développer des interfaces graphiques prisées pour leur convivialité et leur souplesse. On peut alors intégrer des accès à des applications dites du commerce tels que comme représenté sur la figure 1, un tableur, un calculateur, une application de télécommunication ou divers applications multimédia. Cependant l'ouverture de tels systèmes d'exploitation à de nombreuses applications a pour contre partie d'offrir aussi un accès à des applications malveillantes tels que logiciels espions et autres virus désagréables.

De façon à permettre d'acquérir, de traiter et de communiquer par voie d'affichage ou de transmission des données sensibles sans avoir à craindre d'immiscions par une application malveillante, l'équipement passe dans un mode sécurisé qu'il affiche sur une bannière ou un pictogramme. La bannière ou le pictogramme a pour fonction d'indiquer le mode sécurisé ou non sécurisé dans lequel est le terminal. Ici la bannière est par exemple affichée en bas de l'écran 3 qui constitue une position aisément identifiable par l'utilisateur. D'autres positions aisément identifiables existent par exemple en haut, à droite, à gauche ou mouvante de haut en bas de l'écran 3. Comme types de données sensibles dans le cas d'un terminal de paiement, on pense bien entendu aux données de compte et au code de carte bancaire. On peut penser aussi à d'autres types de données telles qu'à titre non limitatif des données médicales, des données biométriques ou sociales.

Il existe de nombreux atouts à afficher un bandeau, une bannière ou tout autre graphisme sur l'écran plutôt que d'allumer ou éteindre un voyant éventuellement dans différentes couleurs. Le voyant risquerait d'être facilement masqué. D'autre part, le voyant nécessiterait que l'utilisateur en connaisse les significations sans ambiguïté alors que sur un bandeau, il suffit d'inscrire un texte clair « mode sécurisé » ou « mode non sécurisé » agrémenté éventuellement de signes connus tels que cadenas ouvert ou fermé. Un affichage sur écran n'est pas figé, on peut adapter la langue ou la taille des polices en fonction des utilisateurs. D'autre part, les utilisateurs, habitués à diriger leur regard sur l'écran, retrouvent un environnement commode qui leur évite de distraire leur regard vers d'autres endroits de l'équipement. Grâce à la protection offerte par l'invention, la modularité qui vient d'être exposée peut-être mise en oeuvre avec un degré de sécurité hautement appréciable.

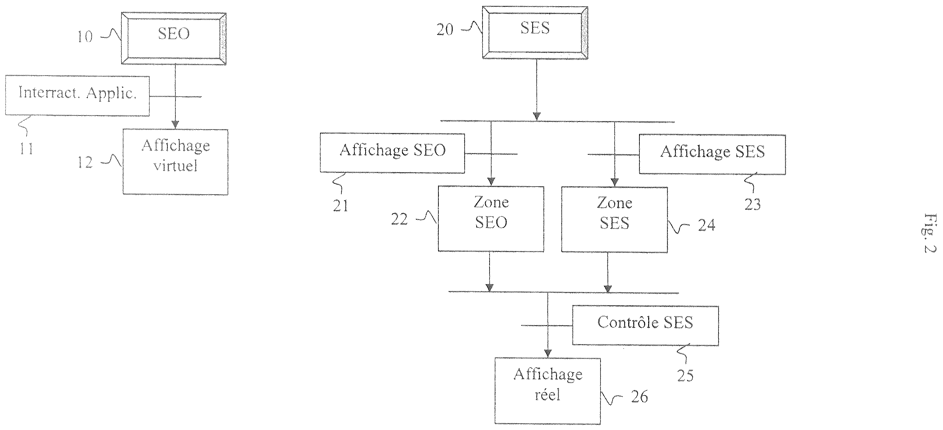

En référence à la figure 2, on explique à présent des étapes préférées pour mettre en oeuvre un procédé de visualisation sécuritaire sur un écran prévu pour afficher un premier ensemble d'informations éditées par un premier système d'exploitation. On notera une étape de filtrage dans laquelle un élément alloue indépendamment du premier système d'exploitation, une première zone de l'écran au premier ensemble d'informations et une deuxième zone de l'écran à un deuxième ensemble d'informations éditées par un deuxième système d'exploitation. L'étape de filtrage est combinée à une étape d'affichage réel dans laquelle les deux ensembles d'informations sont transférés à l'écran sous contrôle exclusif du deuxième système d'exploitation de façon à produire une visualisation sécuritaire du deuxième ensemble d'informations.

De la sorte, le deuxième système d'exploitation peut faire obstacle à une corruption de la visualisation du deuxième ensemble d'information par une application exécutée dans l'environnement du premier système d'exploitation.

Pour mettre en oeuvre le procédé, on utilise un écran tel que l'écran 3 usuellement prévu pour afficher un ensemble d'informations éditées par un système d'exploitation ouvert. Ces informations résultent d'applications qui sont installées pour utiliser les ressources du système d'exploitation dont, comme nous l'avons vu précédemment, le qualificatif « ouvert » tient essentiellement au fait que suffisamment de composantes sont diffusées pour permettre de développer un large éventail d'applications qui, souvent en absence d'évaluation du point de vue de la sécurité, n'offrent aucune garantie quant à l'utilisation qu'elles font des ressources du système. Un avantage toutefois est que l'affichage des informations bénéficie d'un graphisme familier à l'utilisateur et permet de nombreuses interventions de l'utilisateur au moyen du clavier 2 ou de caractéristiques tactiles de l'écran lui-même.

Dans une étape 10 usuelle, le système d'exploitation ouvert (SEO) est en écoute permanente de différentes interruptions ou interactions d'origine logicielle ou matérielle. Les interactions d'origine matérielle sont celles qui concernent des périphériques, au sens large, répertoriés par un programme habituellement déclenché lors du lancement du système d'exploitation et nommé BIOS, acronyme de l'expression anglaise « Basic Input Output System» pour exprimer « Système de Base d'Entrées Sorties ».

Une transition 11 validée à chaque interaction d'une application pour afficher des informations, active une étape 12. L'étape 12 est généralement exécutée par un pilote d'affichage (driver en anglais) installé avec le SEO. Habituellement, le pilote d'affichage transcrit les informations reçues dans une mémoire vidéo périodiquement balayée par un circuit de commande de l'écran. De manière à préparer les étapes suivantes du procédé, le pilote d'affichage du SEO est configuré pour transcrire les informations reçues dans une mémoire vidéo virtuelle. La mémoire vidéo virtuelle est par exemple simplement une zone réservée de la mémoire contrôlée par le SEO vers laquelle le pilote d'affichage du SEO paramétré à cet effet, déroute les données à afficher. De façon à pouvoir exécuter l'étape de filtrage, le contenu de la mémoire vidéo virtuelle est rendu accessible au moins en lecture au système d'exploitation sécurisé. Dans l'étape 12, l'affichage sous contrôle du SEO, est alors de nature virtuelle. Par opposition à un affichage réel où l'image reproduite sur l'écran est celle effectivement générée sous contrôle du SEO, dans le cas d'un affichage virtuel une image n'est pas reproduite sur l'écran telle que générée. Une autre manière de préparer les étapes suivantes du procédé est de configurer le pilote d'affichage pour transcrire les informations reçues dans une mémoire vidéo réelle connectée à un contrôleur vidéo. Contrairement à l'habitude où le contrôleur vidéo est connecté à l'écran, le contrôleur vidéo est connecté à un composant de traitement de l'information de sorte que dans l'étape 12, l'affichage sous contrôle du SEO, est ici encore de nature virtuelle.

Dans une étape 20 indépendante du SEO, un système d'exploitation sécurisé (SES), est en écoute permanente de différentes interruptions ou interactions d'origine logicielle ou matérielle. Le SES se distingue du SEO en ce que son microprogramme (firmware en anglais), est à diffusion restreinte et contrôlée. On peut obtenir un système sécurisé en utilisant un système propriétaire ou un système de base ouvert mais surmonté d'une couche logicielle qui isole le système des accès applicatifs. On appréciera le degré de sécurité offert par le SES car un développement d'applications adaptées au SES, nécessite d'appartenir à un cercle limité de personnes autorisées et d'utiliser des outils de développement spécifiques ou adaptés.

Dans une étape de filtrage, le système d'exploitation sécurisé alloue indépendamment du système d'exploitation ouvert, dans une sous étape 22 une première zone de l'écran au premier ensemble d'informations et dans une sous étape 24 une deuxième zone de l'écran à un deuxième ensemble d'informations éditées par le système d'exploitation sécurisé.

La sous étape 22 est activée par une transition 21 validée par la réception des données d'affichage en provenance du SEO et la sous étape 24 est activée par une transition 23 validée par la réception des données d'affichage en provenance du SES.

Si par exemple l'écran 3 a une surface d'affichage de 640 pixels par 480 pixels, une surface réduite d'affichage de 640 pixels par 455 pixels est allouée à la zone 3a et cette valeur réduite de surface est communiquée au SEO comme étant la surface totale d'affichage disponible. La surface restante d'affichage de 640 pixels par 25 pixels est alors allouée à la zone 3b sans que le SEO n'en ai connaissance. Bien entendu les valeurs données ci-dessus ne le sont qu'à titre d'illustration et on comprendra que le réalisateur de l'invention reste libre de choisir toutes autres valeurs. Comme nous le verrons par la suite, il aussi possible d'allouer la totalité de la surface de l'écran à la zone 3a et d'allouer des parties d'écran non nécessairement connexes à la zone 3b.

Une étape 26 d'affichage réelle est activée par une transition 25 validée sous contrôle exclusif du système d'exploitation sécurisé. Dans l'étape 26 les deux ensembles d'informations sont transférés à l'écran de sorte que le deuxième ensemble d'informations est visualisé de façon sécuritaire.

De façon à améliorer la sécurité du procédé, le système d'exploitation sécurisé est avantageusement hébergé dans un composant matériel qui isole le système d'exploitation ouvert en termes d'accès direct à l'écran.

La situation de chacune des zones sur l'écran résulte d'un adressage en mémoire vidéo réelle effectué en étape 26. En reprenant l'exemple numérique énoncé ci-dessus simplement pour illustrer le propos, le deuxième ensemble d'information est par exemple adressé aux premières lignes de la mémoire vidéo réelle qui correspondent aux 640 par 25 pixels du bas de l'écran et le premier ensemble d'information est alors adressé aux lignes suivantes de la mémoire vidéo réelle qui correspondent aux 640 par 455 pixels de la partie supérieure de l'écran. Ainsi la situation de la deuxième zone en cette première position en bas de l'écran est aisément identifiable par un utilisateur.

Dans un cas où la virtualité de l'affichage est obtenu non pas par déroutement des information d'image en entrée de la mémoire vidéo mais par déroutement en sortie du contrôleur vidéo, on n'intervient non pas sur les adresses mais sur les signaux qui sont utilisés pour le rafraîchissement de l'écran, typiquement les signaux d'horloge, les signaux de contrôle et/ou les signaux de données.

Aucune application malveillante qui utilise les ressources offertes par un premier système d'exploitation, ici le système d'exploitation ouvert, ne peut accéder à la deuxième zone qui est réservée à un deuxième système d'exploitation, ici le système d'exploitation sécurisé. Il en résulte de bonnes qualités de crédibilité sur le contenu affiché dans la deuxième zone.

Dans un premier mode de réalisation préféré, le procédé de visualisation est amélioré pour lutter contre une attaque qui consisterait à couvrir le bas de l'écran avec du ruban adhésif ou par tout autre moyen et à lancer ensuite une application malveillante qui afficherait un faux bandeau en bas de la première zone de façon à tromper l'utilisateur. L'amélioration consiste à permuter alternativement la première position avec une deuxième position précédemment couverte par la première zone. Ceci est réalisable par exemple en inversant l'ordre d'adressage dans la mémoire vidéo réelle. Ceci est propre à décourager les fraudeurs car occulter maintenant le haut et le bas de l'écran aboutirait à une surface utile d'affichage considérablement réduite. De plus, le déplacement de la première zone qui résulte de la permutation aurait pour effet de masquer alternativement une partie de cette zone. Pour éviter de fatiguer inutilement l'utilisateur avec le mouvement du bandeau de sécurité, on peut prévoir une fréquence d'alternance assez basse allant de la minute à la semaine mais de façon préférentiellement aléatoire ou pseudo aléatoire et par conséquent imprévisible pour un fraudeur. De même, l'alternance des positions sur l'écran n'est pas limité au haut et au bas mais peut aussi suivre de façon aléatoire ou circulaire un côté quelconque à la périphérie de l'écran aussi bien à gauche ou à droite qu'en haut ou en bas.

Dans un deuxième mode de réalisation préféré, l'amélioration consiste à ne pas restreindre la taille de la première zone en comparaison de celle de l'écran. La deuxième zone est alors affichée de façon transparente en surimpression de un ou plusieurs endroits de la première zone. Ceci permet de disposer de l'étendue la plus vaste pour afficher l'image générée sous contrôle du SEO. Ceci offre aussi davantage de possibilités pour afficher l'image générée sous contrôle du SES. On peut par exemple faire se mouvoir une bannière de haut en bas de l'écran pour indiquer le mode de sécurité dans lequel on se trouve ou faire se mouvoir un ou plusieurs pictogrammes en différents endroits de l'écran. Un degré de transparence peut être modulé au moyen de coefficients dont le paramétrage va de la lueur, à l'occultation totale (absence de transparence). Les zones (3a) et (3b) peuvent ainsi avoir une intersection non nulle et de valeur quelconque.

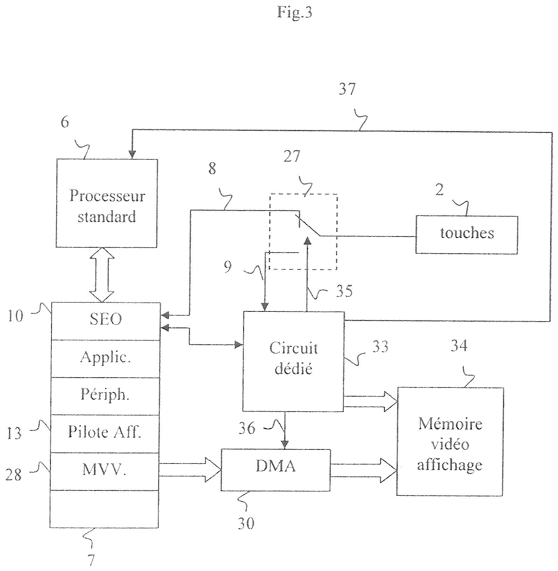

En référence à la figure 3, un équipement électronique tel que le terminal 1 de la figure 1, comprend une mémoire 7 en tout ou en partie de type mémoire vive et un processeur standard 6, c'est-à-dire un processeur disponible dans le commerce. La disponibilité dans le commerce de la documentation qui accompagne généralement le processeur permet toutefois d'en étudier les vulnérabilités au préjudice de la sécurité. Le processeur 6 est câblé avec la mémoire 7 de façon à pouvoir traiter les données qui y sont stockées. Le terme « donnée » est à prendre dans son acception la plus large et peut désigner tant une adresse, un registre de contrôle ou une instruction qu'une valeur de variable.

Un circuit dédié 33, par exemple de type circuit intégré pour application spécifique (ASIC acronyme anglais de Application Specific Integrated Circuit) ou combinaison de circuits intégrés spécifiques et/ou standards, met en oeuvre un système d'exploitation sécurisé. Des mécanismes non décrits ici peuvent permettre de détecter des modifications matérielles ou logicielles du SEO ou de s'assurer d'un fonctionnement conforme à ce qui est attendu du SES. A titre d'exemple, le système d'exploitation sécurisé (SES) est par exemple micro programmé dans le circuit dédié 33 lui-même ou dans une mémoire gravée réinscriptible (non représentée) reliée physiquement au circuit dédié 33. Le SES contrôle le signal de réinitialisation du processeur 6 de façon à le bloquer en cas de détection d'une attaque. Le circuit dédié 33 accède d'autre part à un bus 37 de ports d'accès de tests, par exemple de type JTAG (acronyme anglais de Joint Test Action Group) câblé au processeur 6. L'accès du circuit 33 au bus 37 permet au SES d'installer et de lancer un noyau de système d'exploitation ouvert (SEO) 10 en mémoire 7 pour être exécuté par le processeur 6. Le bus 37 est aussi utilisé par le SES pour authentifier le noyau de SEO au lancement (boot en anglais). Le SEO est configuré quant à lui pour valider si besoin des signatures d'applications chargées en mémoire 7. En cas de détection d'une attaque du SEO, il est par exemple possible de laisser le SES cesser le partage avec le SEO de façon à prendre un contrôle complet de l'affichage, voire de neutraliser le SEO ou recharger une version de SEO par défaut. Ceci augmente encore la sécurité d'utilisation.

La mémoire 7 contient aussi des pilotes de périphériques pour permettre au SEO de contrôler des périphériques de moindre sensibilité tels que la gestion de puissance, des propriétés audio ou une liaison série en en partageant éventuellement certains avec le SES si besoin, par exemple des liaisons sans fil 4, un coupleur Ethernet ou l'affichage sur l'écran 3 à propos duquel des précisions supplémentaires vont être données dans la suite de la description.

Les périphériques plus sensibles tels que par exemple le lecteur de carte 5, un détecteur biométrique s'il existe, des touches numériques du clavier 2 ou de l'écran tactile 3, sont sous le contrôle exclusif du SES. Le SES contrôle aussi d'autres périphériques en les partageant avec le SEO, ce sont par exemple une imprimante, des touches fonctionnelles du clavier 2, un modem ou la batterie de sauvegarde.

Le circuit dédié 33 dispose d'une commande 35 pour aiguiller au moyen d'un commutateur 27, les données échangées avec une dalle tactile combinée à l'écran ou éventuellement certaine touches du clavier 2 soit vers une liaison 8 à destination du SEO, soit vers une liaison 9 à destination du SES. Sur la figure 3, la liaison 9 est branchée sur le circuit dédié 33 pour le cas où celui-ci héberge le SES.

Une alternative possible à l'architecture matérielle décrite en référence à la figure 3 est réalisable fonctionnellement en hébergeant le SES en mémoire 7. Il est alors préférable dans ce cas de donner au SES un contrôle hautement sécuritaire de la mémoire 7, par exemple au moyen d'une structure de protection en anneaux sur un modèle semblable à celui enseigné par le brevet EP0208192B1 ou au moyen d'une unité de gestion de mémoire (MMU pour Memory Management Unit en anglais). Selon cette alternative, le commutateur 27 est réalisable sous forme logicielle dans une couche sécuritaire du SES.

Le contrôle de la dalle tactile est réquisitionné par le SES à détection d'un événement pouvant donner lieu au basculement en mode sécurisé comme par exemple une introduction de carte à puce dans le lecteur 5 ou un passage de carte à piste magnétique. On notera qu'il n'est pas nécessaire d'introduire la carte dans une fente comme par exemple dans le cas d'une carte sans contact. Selon la technologie employée, différentes variantes sont envisagées pour permettre au SES de réquisitionner la dalle tactile. Ont peut citer un contrôle permanent de la dalle tactile par le SES, y compris en mode non sécurisé au cours duquel le SES retransmet alors purement et simplement les signaux en provenance de la dalle tactile au SEO. Ce contrôle permanent permet alors au SES de ne plus retransmettre les signaux au SEO en mode sécurisé. On peut citer encore une commutation de la dalle tactile vers le SEO en mode non sécurisé et vers le SES en mode sécurisé.

L'écran 3 étant prévu pour afficher un ensemble d'informations éditées par le système d'exploitation 10, le SEO dispose d'un pilote d'affichage 13 résidant en mémoire 7. Habituellement, un tel pilote d'affichage est configuré pour ordonner les informations dans une mémoire vidéo d'affichage 34 dont le balayage périodique reporte les informations sur l'écran 3 à l'image d'un miroir.

Un mécanisme intéressant pour mettre en oeuvre le dispositif de visualisation sécuritaire selon l'invention, consiste à interdire un accès direct du SEO à la mémoire vidéo 34 réelle. Le pilote d'affichage 13 est alors configuré de façon à ce que les informations éditées par le SEO soient envoyées dans une mémoire vidéo virtuelle (MVV) 28.

La mémoire vidéo virtuelle 28 est alors utilisée en entrée d'un filtre agencé pour allouer indépendamment du système d'exploitation ouvert, une première zone 3a de l'écran au premier ensemble d'informations éditées par le système d'exploitation ouvert. Le filtre permet d'allouer une deuxième zone 3b de l'écran à un deuxième ensemble d'informations éditées par le système d'exploitation sécurisé.

Le filtre peut être réalisé de différentes manières. A titre illustratif, l'utilisation d'un mécanisme d'accès mémoire direct 30 (DMA pour Direct Memory Access en anglais) permet d'accélérer le transfert depuis la mémoire vidéo virtuelle 28 jusqu'à l'écran en passant par la mémoire vidéo réelle 34. D'autres manières de réaliser le filtre seront exposées plus loin dans la description.

Une commande 36 du DMA sous contrôle du SES permet d'agencer la mémoire vidéo réelle 34 pour transférer les deux ensembles d'informations à l'écran sous contrôle exclusif du système d'exploitation sécurisé. De cette façon, on produit une visualisation sécuritaire du deuxième ensemble d'informations car la deuxième zone 3b étant inaccessible au SEO, aucune application exécutable au moyen du SEO, ne peut y introduire d'informations fausses.

En référence à la figure 3, la sécurisation du dispositif de visualisation résulte de la combinaison de la mémoire vidéo virtuelle 28, du filtre associant le circuit dédié 33 à un accès mémoire direct en mémoire 28 et de la mémoire virtuelle réelle 34 qui constituent chacun un composant matériel agencé pour isoler le système d'exploitation ouvert en termes d'accès direct à l'écran 3 au moyen du système d'exploitation sécurisé. Ce mode de réalisation offre un meilleur degré de confiance que celui naturellement accordé à un mode de réalisation logique car aucune panne, aucune intrusion logicielle ne peut permettre à une application malveillante du monde ouvert d'accéder à la zone protégée de l'écran.

Dans le cas de l'alternative précédemment exposée où intervient un mécanisme de type protection en anneaux ou par MMU, on peut concevoir une réalisation du filtre sous forme logicielle dans une couche à haut degré de protection de la structure en anneaux ou de contrôle MMU. Associé ou non à la gestion du clavier, le SES alloue par exemple les différentes zones par translation d'adresses.

On note sur la figure 1 que la deuxième zone est matérialisée par une bannière située en bas de l'écran 3 qui constitue une première position aisément identifiable par un utilisateur. Si l'écran est une reproduction ligne à ligne de la mémoire 34, le SES contrôle le DMA de façon à recopier les informations extraites de la mémoire 25 à des adresses en tête de la mémoire 34 et les informations signalant le mode sécurisé ou non sécurisé à des adresses en queue de la mémoire 34. Grâce au dispositif exposé ci-dessus, on comprendra que le SES peut réquisitionner d'autres zones à l'intérieur de celle normalement attribuée au SEO, par exemple pour incruster une fenêtre de saisie de code secret, bien entendu lorsque le SES commande de visualiser le mode sécurisé de façon à lever toute ambiguïté sur la confiance à accorder à la fenêtre de saisie.

Pour permuter alternativement la première position avec une deuxième position précédemment couverte par la première zone, il suffit au SES de simplement modifier les adresses de la mémoire 34 dans lesquelles transférer les informations éditées par le SEO et celles éditées par le SES. Lorsque la zone 3b passe du bas de l'écran au haut de l'écran, la zone 3a est décalée vers le bas et réciproquement. La fréquence de permutation est suffisamment basse pour ne pas perturber l'utilisateur. Avantageusement la fréquence de permutation est paramétrable avec possibilité d'être agrémentée d'une composante aléatoire ou pseudo aléatoire et/ou d'une détection d'activité utilisateur de façon à figer un positionnement en cours d'interaction de l'utilisateur avec l'une quelconque des zones de l'écran. La dalle tactile est échantillonnée sous forme de mesures par le système d'exploitation qui établit une correspondance avec une région pressée ou touchée de l'écran. Ceci permet par exemple d'associer une commande à une image ou de reconnaître une signature manuscrite tracée par l'utilisateur sur l'écran. Ce lieu est identifié d'une part par les coordonnées de la pression détectée sur l'écran, c'est à dire sur la dalle tactile et d'autre part par les coordonnées de l'image sur l'écran, c'est-à-dire plus exactement dans la première zone attribuée au SEO. Un déplacement de la première zone sur l'écran provoque une translation des coordonnées réelles de l'image. Pour mettre en concordance les coordonnées de l'image avec celles du point de pression, le dispositif est agencé pour translater les coordonnées du point de pression en fonction de la position de la première zone de façon à restituer la concordance du point de pression avec l'image qui convient.

Le mécanisme qui vient d'être décrit montre un avantage supplémentaire d'un affichage de la seconde zone par superposition sur la première zone. Les coordonnées virtuelles, c'est-à-dire les coordonnées telles qu'elles sont vues par le système d'exploitation, étant grâce à l'affichage par superposition, les mêmes que les coordonnées réelles d'affichage sur l'écran, il n'est plus nécessaire de mettre en oeuvre un mécanisme compliqué pour restituer la concordance du point de pression sur une dalle tactile avec l'image qui convient.

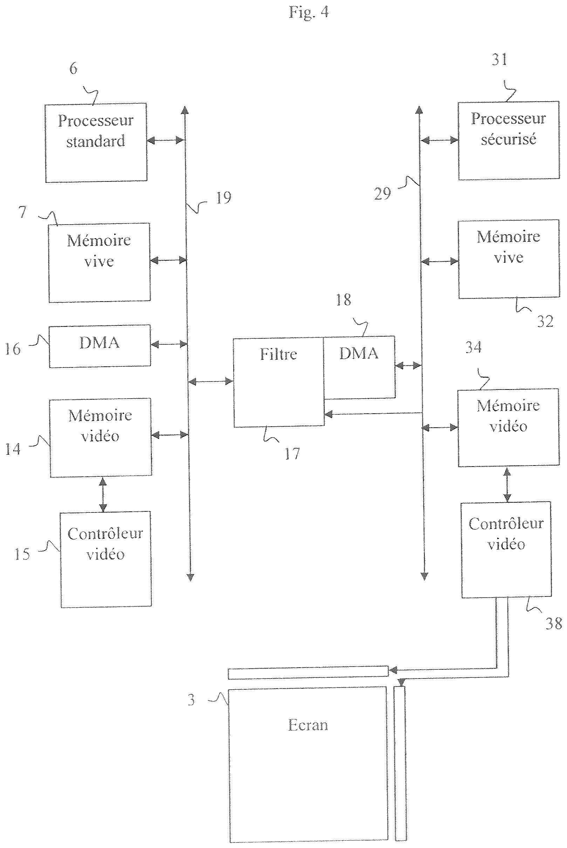

En référence à la figure 4, le dispositif comprend un premier composant standard dans lequel le processeur standard 6 est connecté à la mémoire 7 par un bus système 19. Un élément DMA 16 connecté au bus 19 permet de faire des transferts de la mémoire 7 vers une mémoire vidéo 14 elle aussi connectée au bus 19. D'autre part la mémoire vidéo 14 est connectée à un contrôleur vidéo 15 habituellement prévu pour être raccordé à un écran. Le processeur standard 6 est prévu pour exécuter un système d'exploitation ouvert.

Le dispositif comprend aussi un deuxième composant semblable au précédent et dans lequel un bus 29 relie une mémoire vive 32 à une mémoire vidéo 34 qui est connectée à un contrôleur vidéo 38. A la différence du premier composant, c'est un processeur sécurisé 31 qui est connecté au bus 29. Il est possible de choisir parmi plusieurs moyens pour sécuriser un processeur ou de combiner tout ou partie de ces divers moyens. Un premier moyen consiste à concevoir le processeur lui-même avec une architecture de type propriétaire. Un deuxième moyen consiste à protéger l'ensemble du deuxième composant dans un boîtier physiquement résistant aux intrusions ou capable de les détecter et d'y apporter éventuellement une réponse adaptée. Un troisième moyen consiste à doter le processeur d'un système d'exploitation sécurisé tel que défini précédemment.

Dans la mise en oeuvre expliquée en référence à la figure 4, le contrôleur vidéo 38 contrôle l'intégralité de l'écran 3 en lui transmettant de manière connue un signal d'horloge pour la synchronisation, un signal de trame et un signal de pixel dans une trame qui code des composantes de lumière et ou de couleur. Un filtre 17 est connecté d'une part au bus 19 et d'autre part au bus 29. L'élément DMA 16 est paramétré de façon à transférer les données vidéo vers le filtre 17 au lieu de les transférer vers la mémoire vidéo 14. Le filtre 17 est contrôlé par le processeur 31 (contrôle symbolisé par la flèche à sens unique allant du bus 29 vers le filtre 17) de façon à combiner les données vidéo générées sous contrôle du système d'exploitation ouvert avec les données vidéo générées sous contrôle du système d'exploitation sécurisé. Les données vidéo générées sous contrôle du système d'exploitation ouvert sont celles en provenance du bus 19 et les données vidéo générées sous contrôle du système d'exploitation sécurisé sont celles en provenance du bus 29. Selon la variante retenue parmi celles précédemment exposées, la combinaison peut consister à :
- attribuer des coordonnées d'affichage X,Y distinctes aux deux types de données vidéo (provenance du bus 19 et provenance du bus 29), de façon fixe ou mobile ;
- partager certaines coordonnées d'affichage X,Y pour au moins une partie des deux types de données vidéo en mélangeant les signaux, par exemple en les additionnant de façon à créer un effet de surimpression transparente, ici encore de façon fixe ou mobile.
Au fur et à mesure de la combinaison des données vidéo, le filtre 17 les transmet à la mémoire vidéo 34 par le bus 29. De façon à améliorer la fluidité de l'image et à soulager le processeur 31, un élément DMA 18 est paramétré pour transférer vers le filtre 17 des données vidéo en provenance de la mémoire 32 ou directement du processeur 31 et pour transférer vers la mémoire 34 les données vidéo combinées par le filtre 17.

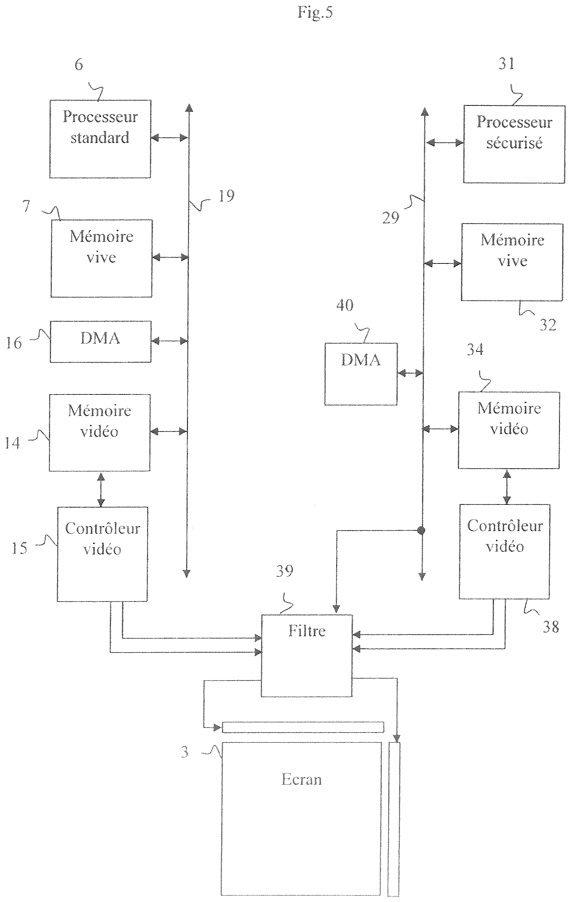

Dans la mise en oeuvre expliquée en référence à la figure 5, les signaux générés par le contrôleur vidéo 38 sont déroutés vers un filtre 39. De même les signaux générés par le contrôleur vidéo 15 sont déroutés vers le filtre 39. L'élément DMA 16 est paramétré de façon standard pour transférer les données vidéo vers la mémoire vidéo 14. Le filtre 39 est contrôlé par le processeur 31 (contrôle symbolisé par la flèche à sens unique allant du bus 29 vers le filtre 39) de façon à combiner des signaux vidéo générés sous contrôle du système d'exploitation ouvert avec des signaux vidéo générés sous contrôle du système d'exploitation sécurisé. Les signaux vidéo générés sous contrôle du système d'exploitation ouvert sont ceux en provenance du contrôleur vidéo 15 et les signaux vidéo générés sous contrôle du système d'exploitation sécurisé sont ceux en provenance du contrôleur vidéo 38. Selon la variante retenue parmi celles précédemment exposées, la combinaison peut consister à :
- jouer de manière constante ou variable sur le signal d'horloge de façon à aiguiller les deux types de signaux vidéo (provenance du contrôleur 15 et provenance du contrôleur 38), vers des parties distinctes de l'écran 3;
- pour chacun de tout ou partie des pixels de l'écran 3, mélanger les signaux, par exemple en les additionnant de façon à créer un effet de surimpression transparente. La mobilité du pictogramme ou de la bannière de sécurité de même que le positionnement d'une fenêtre de saisie sécuritaire peut alors être entièrement géré par une application sous contrôle du SES en affichant son image sur fond neutre, les deux systèmes d'exploitation disposant de la totalité de la superficie d'affichage.
Au fur et à mesure de la combinaison des signaux vidéo, le filtre 39 les transmet à l'écran 3 de même que l'aurait fait un contrôleur vidéo. Cette mise en oeuvre permet d'exploiter la totalité des fonctionnalités d'affichage du premier composant telles que par exemple des fonctionnalités d'accélération graphique ou d'affichage 3D prévues de base en tandem avec le contrôleur vidéo 15 dans de nombreux composants du commerce.

En termes d'industrialisation, on appréciera la possibilité offerte par l'invention de concilier la convivialité de nombreux équipements de traitement de l'information produits à grande échelle avec la robustesse requise pour des traitements sécuritaires d'informations sensibles.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de visualisation sécuritaire sur un écran prévu pour afficher un premier ensemble d'informations éditées par un premier système d'exploitation non sécurisé, comprenant :
- une étape (22,23) de filtrage dans laquelle un élément alloue indépendamment du premier système d'exploitation, une première zone de l'écran au premier ensemble d'informations et une deuxième zone de l'écran à un deuxième ensemble d'informations éditées par un deuxième système d'exploitation sécurisé, ledit deuxième système d'exploitation sécurisé étant hébergé dans un composant matériel qui isole le système d'exploitation non sécurisé d'un accès direct à l'écran ;
- une étape (26) d'affichage réel dans laquelle les deux ensembles d'informations sont transférés à l'écran sous contrôle exclusif du deuxième système d'exploitation sécurisé de façon à produire une visualisation sécuritaire du deuxième ensemble d'informations.

2. Procédé de visualisation selon la revendication 1, **caractérisé en ce qu'**il comprend une étape (12) d'affichage virtuel dans laquelle le premier ensemble d'informations est écrit dans une mémoire vidéo virtuelle sous contrôle du premier système d'exploitation et dont le contenu est accessible au deuxième système d'exploitation.

3. Procédé de visualisation selon la revendication 1, **caractérisé en ce qu'**il comprend une étape (12) d'affichage virtuelle dans laquelle le premier ensemble d'informations est écrit dans une mémoire vidéo réelle sous contrôle du premier système d'exploitation de façon à pouvoir combiner des premiers signaux vidéo qui en résultent avec des deuxièmes signaux vidéo qui résultent du deuxième ensemble d'informations sous contrôle du deuxième système d'exploitation.

4. Procédé de visualisation selon l'une des revendications précédentes **caractérisé en ce que** la deuxième zone est située sur l'écran en une première position aisément identifiable par un utilisateur.

5. Procédé de visualisation selon la revendication 4, **caractérisé en ce que** ladite première position est alternativement permutée avec une deuxième position précédemment couverte par la première zone.

6. Procédé de visualisation selon l'une des revendications précédentes, **caractérisé en ce que** la deuxième zone est superposée avec ou sans transparence sur la première zone en une ou plusieurs positions sur l'écran.

7. Procédé de visualisation selon la revendication 6 **caractérisé en ce que** l'une au moins des dites positions est mouvante sur l'écran.

8. Dispositif de visualisation sécuritaire sur un écran (3) prévu pour afficher un premier ensemble d'informations éditées par un premier système d'exploitation non sécurisé, **caractérisé en ce qu'**il comprend :
- un filtre (17,30,39,) agencé pour allouer indépendamment du premier système d'exploitation, une première zone (3a) de l'écran au premier ensemble d'informations et une zone (3b) de l'écran à un deuxième ensemble d'informations éditées par un deuxième système d'exploitation sécurisé, ledit deuxième système d'exploitation sécurisé étant hébergé dans un composant matériel qui isole le système d'exploitation non sécurisé d'un accès direct à l'écran ;
- des moyens de transfert des deux ensembles d'informations à l'écran sous contrôle exclusif du deuxième système d'exploitation sécurisé de façon à produire une visualisation sécuritaire du deuxième ensemble d'informations.

9. Dispositif de visualisation selon la revendication 8, **caractérisé en ce que** le filtre comprend en entrée une mémoire vidéo virtuelle (26) agencée pour recevoir le premier ensemble d'informations sous contrôle du premier système d'exploitation non sécurisé et en sortie une mémoire vidéo réelle (34) pour combiner les deux ensembles d'informations.

10. Dispositif de visualisation selon la revendication 8, **caractérisé en ce que** le filtre (17) est agencé pour recevoir des premières données vidéo générées par un processeur standard (6), sur lequel s'exécute le premier système d'exploitation et des deuxièmes données vidéo générées par un processeur sécurisé (31)), sur lequel s'exécute le deuxième système d'exploitation, et pour transférer dans une mémoire vidéo (34) une combinaison des premières et des deuxièmes données vidéo.

11. Dispositif de visualisation selon la revendication 8, **caractérisé en ce que** le filtre (39) est agencé pour recevoir des premiers signaux vidéo en provenance d'un premier contrôleur vidéo (15) et des deuxièmes signaux vidéo en provenance d'un deuxième contrôleur vidéo (38), et pour transférer sur l'écran (3) une combinaison des premiers et des deuxièmes signaux vidéo.

12. Dispositif de visualisation selon la revendication 8 à 11, **caractérisé en ce que** le filtre (17, 30, 39) est agencé pour placer la deuxième zone à l'écran (3) en une première position aisément identifiable par un utilisateur.

13. Dispositif de visualisation selon la revendication 12, **caractérisé en ce que** le filtre (17,30,39) est agencé pour permuter ladite première position alternativement avec une deuxième position précédemment couverte par la première zone.

14. Dispositif de visualisation selon l'une des revendications 8 à 11, **caractérisé en ce que** le filtre (17, 30, 39) est agencé pour superposer avec ou sans transparence la deuxième zone sur la première zone en une ou plusieurs positions sur l'écran.

15. Dispositif de visualisation selon la revendication 14, **caractérisé en ce que** le filtre (17, 30, 39) est agencé pour faire se mouvoir l'une au moins des dites positions sur l'écran.

## Patentansprüche

1. Verfahren zur sicheren Anzeige auf einem Bildschirm, das dazu vorgesehen ist eine erste Gesamtheit von Informationen, die von einem ersten nicht gesicherten Betriebssystem editiert werden, anzuzeigen, umfassend:
- einen Filterschritt (22, 23), in dem ein Element unabhängig vom ersten Betriebssystem eine erste Zone des Bildschirms der ersten Gesamtheit von Informationen und eine zweite Zone des Bildschirms einer zweiten Gesamtheit von Informationen, die von einem zweiten gesicherten Betriebssystem editiert werden, zuordnet, wobei das zweite gesicherte Betriebssystem in einer Hardware-Komponente untergebracht ist, die das nicht gesicherte Betriebssystem vor einem direkten Zugriff auf den Bildschirm isoliert;
- einen Realanzeigeschritt (26), in dem die zwei Gesamtheiten von Informationen an den Bildschirm unter ausschließlicher Kontrolle des zweiten gesicherten Betriebssystems weitergeleitet werden, um eine gesicherte Anzeige der zweiten Gesamtheit von Informationen zu erzeugen.

2. Anzeigeverfahren nach Anspruch 1, **dadurch gekennzeichnet, dass** eines einen virtuellen Anzeigeschritt (12) umfasst, in dem die erste Gesamtheit von Informationen in einen virtuellen Videospeicher unter Kontrolle des ersten Betriebssystems geschrieben wird, und dessen Inhalt am zweiten Betriebssystem zugänglich ist.

3. Anzeigeverfahren nach Anspruch 1, **dadurch gekennzeichnet, dass** es einen virtuellen Anzeigeschritt (12) umfasst, in dem die erste Gesamtheit von Informationen in einen realen Videospeicher des ersten Betriebssystems geschrieben wird, um erste Videosignale, die sich daraus ergeben, mit zweiten Videosignalen kombinieren zu können, die sich aus der zweiten Gesamtheit von Informationen unter Kontrolle des zweiten Betriebssystems ergeben.

4. Anzeigeverfahren nach einem der vorhergehenden Ansprüche, **dadurch gekennzeichnet, dass** sich die zweite Zone auf dem Bildschirm in einer ersten Position befindet, die von einem Benutzer leicht identifizierbar ist.

5. Anzeigeverfahren nach Anspruch 4, **dadurch gekennzeichnet, dass** die erste Position alternativ mit einer zweiten Position, die vorher von der ersten Zone abgedeckt war, vertauscht wird.

6. Anzeigeverfahren nach einem der vorhergehenden Ansprüche, **dadurch gekennzeichnet, dass** die zweite Zone mit oder ohne Transparenz auf die erste Zone in einer oder mehreren Positionen auf dem Bildschirm gelegt wird.

7. Anzeigeverfahren nach Anspruch 6, **dadurch gekennzeichnet, dass** sich die mindestens eine der Positionen auf dem Bildschirm bewegt.

8. Vorrichtung zur sicheren Anzeige auf einem Bildschirm (3), die dazu vorgesehen ist, eine erste Gesamtheit von Informationen, die von einem ersten nicht gesicherten Betriebssystem editiert werden, anzuzeigen, **dadurch gekennzeichnet, dass** sie umfasst:
- einen Filter (17, 30, 39), der dazu vorgesehen ist, unabhängig vom ersten Betriebssystem eine erste Zone (3a) des Bildschirms der ersten Gesamtheit von Informationen und eine zweite Zone (3b) des Bildschirms einer zweiten Gesamtheit von Informationen, die von einem zweiten gesicherten Betriebssystem editiert werden, zuzuordnen, wobei das zweite gesicherte Betriebssystem in einer Hardware-Komponente untergebracht ist, die das nicht gesicherte Betriebssystem vor einem direkten Zugriff auf den Bildschirm isoliert;
- Mittel zur Weiterleitung der zwei Gesamtheiten von Informationen an den Bildschirm unter ausschließlicher Kontrolle des zweiten gesicherten Betriebssystems, um eine gesicherte Anzeige der zweiten Gesamtheit von Informationen zu erzeugen.

9. Anzeigevorrichtung nach Anspruch 8, **dadurch gekennzeichnet, dass** der Filter am Eingang einen virtuellen Videospeicher (26) umfasst, der dazu vorgesehen ist, die erste Gesamtheit von Informationen unter Kontrolle des ersten nicht gesicherten Betriebssystems zu empfangen, und am Ausgang einen realen Videospeicher (34), um die zwei Gesamtheiten von Informationen zu kombinieren.

10. Anzeigevorrichtung nach Anspruch 8, **dadurch gekennzeichnet, dass** der Filter (17) dazu vorgesehen ist, erste Videodaten, die von einem Standard-Prozessor (6) erzeugt werden, auf dem das erste Betriebssystem ausgeführt wird, und zweite Videodaten, die von einem gesicherten Prozessor (31) erzeugt werden, auf dem das zweite Betriebssystem ausgeführt wird, zu empfangen, und in einen Videospeicher (34) eine Kombination der ersten und der zweiten Videodaten weiterzuleiten.

11. Anzeigevorrichtung nach Anspruch 8, **dadurch gekennzeichnet, dass** der Filter (39) dazu vorgesehen ist, erste Videosignale von einem ersten Videokontroller (15) und zweite Videosignale von einem zweiten Videokontroller (38) zu empfangen, und auf den Bildschirm (3) eine Kombination der ersten und der zweiten Videosignale weiterzuleiten.

12. Anzeigevorrichtung nach Anspruch 8 bis 11, **dadurch gekennzeichnet, dass** der Filter (17, 30, 39) dazu vorgesehen ist, die zweite Zone am Bildschirm (3) in einer ersten Position anzuordnen, die von einem Benutzer leicht identifizierbar ist.

13. Anzeigevorrichtung nach Anspruch 12, **dadurch gekennzeichnet, dass** der Filter (17, 30, 39) dazu vorgesehen ist, die erste Position alternativ mit einer zweiten Position, die vorher von der ersten Zone abgedeckt war, zu vertauschen.

14. Anzeigevorrichtung nach einem der Ansprüche 8 bis 11, **dadurch gekennzeichnet, dass** der Filter (17, 30, 39) die zweite Zone mit oder ohne Transparenz auf die erste Zone in einer oder mehreren Positionen auf dem Bildschirm legt.

15. Anzeigevorrichtung nach Anspruch 14, **dadurch gekennzeichnet, dass** der Filter (17, 30, 39) dazu vorgesehen ist, mindestens eine der Positionen auf dem Bildschirm bewegen zu lassen.

## Claims

1. Method of secure display on a screen designed to display a first set of information edited by a first untrusted operating system, comprising:
- a filtering step (22, 23) in which an element allocates, independently of the first operating system, a first zone of the screen to the first set of information and a second zone of the screen to a second set of information edited by a second operating system which is secure;
- a real display step (26) in which the two sets of information are transferred to the screen under the sole control of the second secured operating system so as to produce a secure display of the second set of information.

2. Display method according to claim 1, **characterised in that** it comprises a virtual display step (12) in which the first set of information is written in a virtual video memory under the control of the first operating system and the content of which is accessible to the second operating system.

3. Display method according to claim 1, **characterised in that** it comprises a virtual display step (12) in which the first set of information is written in a real video memory under the control of the first operating system so as to be able to combine first video signals that result therefrom with second video signals that result from the second set of information under the control of the second operating system.

4. Display method according to one of the preceding claims, **characterised in that** the second zone is situated on the screen at a first position easily identifiable by a user.

5. Display method according to claim 4, **characterised in that** said first position is alternately permuted with a second position previously covered by the first zone.

6. Display method according to one of the preceding claims, **characterised in that** the second zone is superimposed with or without transparency on the first zone at one or more positions in the screen.

7. Display method according to claim 6, **characterised in that** at least one of said positions is moving on the screen.

8. Device for secure display on a screen (3) designed to display a first set of information edited by a first untrusted operating system, **characterized in that** it comprises:
a filter (17, 30, 39) arranged to allocate independently of the first operating system a first zone (3a) of the screen to the first set of information and a second zone (3b) of the screen to a second set of information edited by a second secured operating system;
means for transferring the two sets of information to the screen under the sole control of the second secured operating system so as to produce a secure display of the second set of information.

9. Display device according to claim 8, **characterised in that** the filter comprises at the input a virtual video memory (26) arranged to receive the first set of information under the control of the first untrusted operating system and at the output a real video memory (34) for combining the two sets of information.

10. Display device according to claim 8, **characterised in that** the filter (17) is arranged to receive the first video data generated by a standard processor (6), on which said first operating system runs and second video date generated by a secure processor (31) on which said second operating system runs, and for transferring into video memory (34) a combination of the first and second video data.

11. Display device according to claim 8, **characterised in that** the filter (39) is arranged to receive first video signals coming from a first video controller (15) and second video signals coming from a second video controller (38), and to transfer onto the screen (3) a combination of the first and second video signals.

12. Display device according to one of claims 8 to 11, **characterised in that** the filter (17, 30, 39) is arranged to place the second zone on the screen (3) at a first position easily identifiable by a user.

13. Display device according to claim 12, **characterised in that** the filter (17, 30, 39) is arranged to permute said first position alternately with a second position previously covered by the first zone.

14. Display device according to one of claims 8 to 11, **characterised in that** the filter (17, 30, 39) is arranged to superimpose the second zone on the first zone, with or without transparency, at one or more positions on the screen.

15. Display device according to claim 16, **characterised in that** the filter (17, 30, 39) is arranged to make at least one of said positions move on the screen.
